# EUROPEAN PATENT SPECIFICATION

(11) **EP 0 376 253 B1**
(45) Date of publication and mention of the grant of the patent: **12.03.1997**
(21) Application number: 89123965.9
(22) Date of filing: 27.12.1989
(51) Int. Cl.: G06F 12/08

(54) **Information processing apparatus with cache memory**
Informationsverarbeitungsvorrichtung mit Cache-Speicher
Appareil de traitement d'information avec antémémoire

(30) Priority: 27.12.1988 JP 330149/88
(43) Date of publication of application: 04.07.1990
(73) Proprietor: KABUSHIKI KAISHA TOSHIBA, Kawasaki-shi, Kanagawa-ken 210 (JP); TOSHIBA MICRO-ELECTRONICS CORPORATION, Kawasaki-ku, Kawasaki-shi (JP)
(72) Inventor: Sakaue, Kenji Intellectual Property Division, Minato-ku Tokyo 105 (JP)
(74) Representative: Lehn, Werner, Dipl.-Ing.

(56) References cited:
- EP-A- 0 279 189
- WO-A-85/04737
- US-A- 4 646 233
- IBM TECHNICAL DISCLOSURE BULLETIN, vol. 23, no. 7B, December 1980, pages 3461-3463; J. YAMOUR: "Odd/even interleave cache with optimal hardware array cost, cycle time and variable data port width"

## Description

The present invention generally relates to an information processing apparatus and, more particularly, to an information processing apparatus with a cache memory.

An information processing apparatus such as a computer or a word processor often includes a main memory with a relatively large capacity divided into a plurality of blocks each having a predetermined size, and a cache memory, with a capacity smaller than that of the main memory, for achieving high-speed processing. In such an information processing apparatus, the memory contents are stored in the cache memory from the main memory in units of blocks divided to each have the predetermined size, and are returned from the cache memory to the main memory. If the cache memory is driven by a 32-bit microprocessor, the predetermined size corresponds to 4 words (16 bytes).

In a conventional information processing apparatus, a microprocessor can access only one word in the cache memory at a time. For this reason, an application, e.g., in which a plurality of arbitrary words are simultaneously accessed to increase a processing speed, cannot be performed, thus preventing high-speed processing.

WO-A-85/04737 and EP-A-0279 189 show such apparatus. US-A-4 646 233 shows the features of the preamble of claim 1.

It is an object of the present invention to provide an information processing apparatus which allows a read operation of a plurality of data from a cache memory upon one access, thus realizing high-speed processing.

According to the present invention, there is provided an information processing apparatus, having:
a first memory for storing a large amount of data in units of data blocks each having a predetermined size, said first memory storing a plurality of data blocks, each of said data blocks including a plurality of subblocks, and each of said subblocks including a plurality of byte data;
a second memory, connected to said first memory so as to transfer data to/from said memory in units of data blocks, for storing a predetermined number of data blocks to perform high-speed processing;
address generating means for generating a desired data block address and a desired data subblocks address to access a desired data subblock in a desired data block said second memory;
determining means for receiving said data block address generated by said address generating means and for determining whether the desired data block is present in said second memory; and
first reading means, connected to said second memory and said determining means, for reading said desired data subblock corresponding to the data subblock address of said desired data subblock included in the desired data block from said second memory when said determining means determines that said desired data block is present in said second memory,
characterised in that
said address generating means is operable to generate simultaneously a data block address corresponding to the desired data block and a plurality of desired data subblocks to be accessed from said second memory, said data block address being common to each of said plurality of data subblock addresses; and
said first reading means is operable to read simultaneously said plurality of desired data subblocks corresponding to the data subblocks included in the desired data block from said second memory when said determining means determines that said desired data block is present in said second memory,
the apparatus further comprising:
transferring means for, when said determining means determines that the desired data block is not present in said second memory, transferring the desired data block from said first memory to said second memory; and
second reading means for simultaneously reading said plurality of desired data subblocks included in said desired data block after the transfer of the desired data block by said transferring means, and wherein
said second memory includes a plurality of address input port and a plurality of data output ports, the number of said address input ports corresponding to the number of said desired data subblocks and the number of said data output ports corresponding to the number of said desired data subblocks.

This invention can be more fully understood from the following detailed description when taken in conjunction with the accompanying drawings, in which:
Fig. 1 is a schematic block diagram of an information processing apparatus according to the present invention;
Fig. 2 is a view showing a detailed arrangement of a cache memory shown in Fig. 1;
Fig. 3 is a block diagram of an information processing apparatus using a 32-bit microprocessor according to the first embodiment of the present invention;
Fig. 4 is a block diagram of an information processing apparatus using a 32-bit microprocessor according to the second embodiment of the present invention;
Fig. 5 is a block diagram of an information processing apparatus using a 32-bit microprocessor according to the third embodiment of the present invention; and
Fig. 6 is a block diagram for explaining processing of the 32-bit microprocessor for driving a cache memory shown in Figs. 3 to 5.

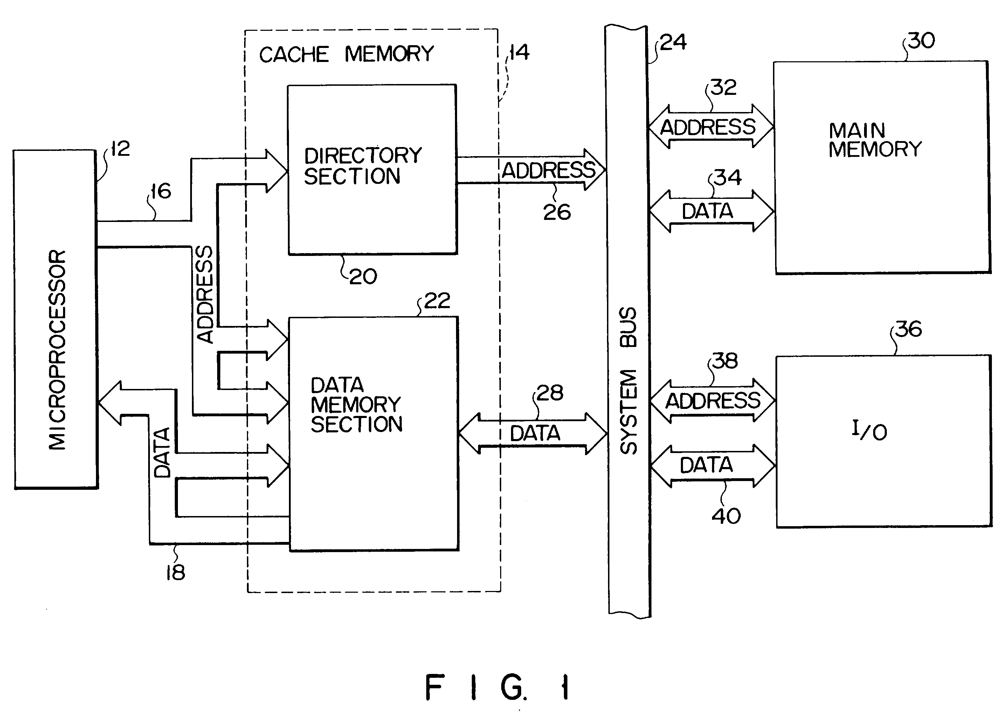

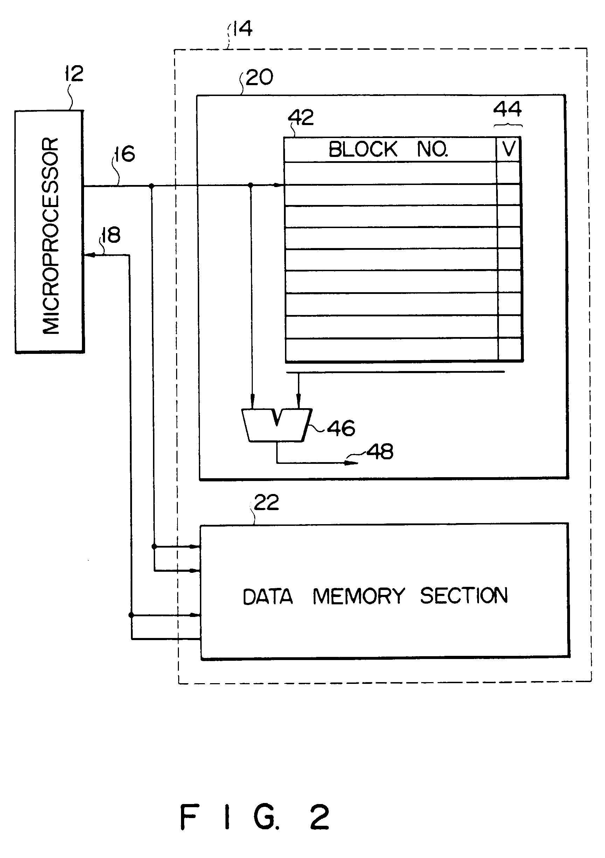

Fig. 1 is a schematic block diagram of an information processing apparatus according to the present invention. Fig. 1 illustrates a microprocessor system using a cache memory. Fig. 2 is a view showing a detailed arrangement of the cache memory shown in Fig. 1.

As shown in Fig. 1, a microprocessor 12 is connected to a cache memory 14 through address and data buses 16 and 18. The memory 14 includes a directory section 20 and a data memory section 22. The memory 14 is connected to a system bus 24 through address and data buses 26 and 28. A main memory 30 is connected to the system bus 24 through address and data buses 32 and 34. In addition, an I/O unit 36 is connected to the system bus 24 through address and data buses 38 and 40.

The memory space in the main memory 30 is divided into units each having a predetermined size, and the divided areas are to be referred to as "blocks" hereinafter. Data stored in these blocks are to be referred to as "data blocks" hereinafter. The contents of the main memory 30 are stored in the cache memory 14 in units of data blocks. The contents of the cache memory 14 are returned to the main memory 30 in units of blocks.

These blocks have block numbers corresponding to addresses of the main memory 30, respectively. These block numbers are to be referred to as "tag information" hereinafter. When the blocks in the main memory 30 are mapped on the cache memory 14, the data block in each block is stored in the data memory section 22 in the cache memory 14.

As shown in Fig. 2, the directory section 20 in the cache memory 14 includes a tag information portion 42, a tag valid bit portion 44, and a comparator 46. The tag information portion 42 stores the tag information. The tag valid bit portion 44 stores valid bits representing the validity of the tag information.

With the above arrangement, data access is performed by the microprocessor 12 in the following manner.

In Fig. 2, the microprocessor 12 inputs address information of required data including data block and word addresses (to be described later) to the cache memory 14 through the address bus 16. The cache memory 14 retrieves tag information stored in the tag information portion 42 on the basis of the address data. The above retrieval operation is performed by comparing the address output from the microprocessor 14 to the address bus 16 with the tag information output from the tag information portion 42 by the comparator 46. The retrieval result can be obtained by a hit/mishit output 48 from the comparator 46. The hit/mishit output 48 is supplied to the microprocessor 12 (not shown).

When the tag information which coincides with the address information is present in the tag information portion 42, this is determined as a "hit", and the microprocessor 12 accesses the corresponding data. In contrast to this, when the tag information which coincides with the address information is not present in the tag information portion 42, this is determined as a "mishit". In this case, the data requested by the microprocessor 12 is not present in the cache memory 14. In this case, the microprocessor 12 performs trapping processing to store the requested data stored in the block in the main memory 30 in an empty block in the cache memory 14 (data memory section 22). At this time, when no empty block is present in the cache memory 14 (data memory section 22), the microprocessor 12 returns nonrequested data from the block which stores this data among the blocks in the cache memory 14 (data memory section 22) to the main memory 30, thus obtaining an empty block. Data in the requested block is transferred from the main memory 30 to the empty block, and is stored in the empty block.

The blocks in the main memory 30 are assigned in the cache memory 14 by a known method such as a full associative system, a direct mapping system, or a set associative system. In this case, the direct mapping system is exemplified and will be described below. In the direct mapping system, the blocks on the main memory 30 are mapped in specific blocks in the cache memory 14.

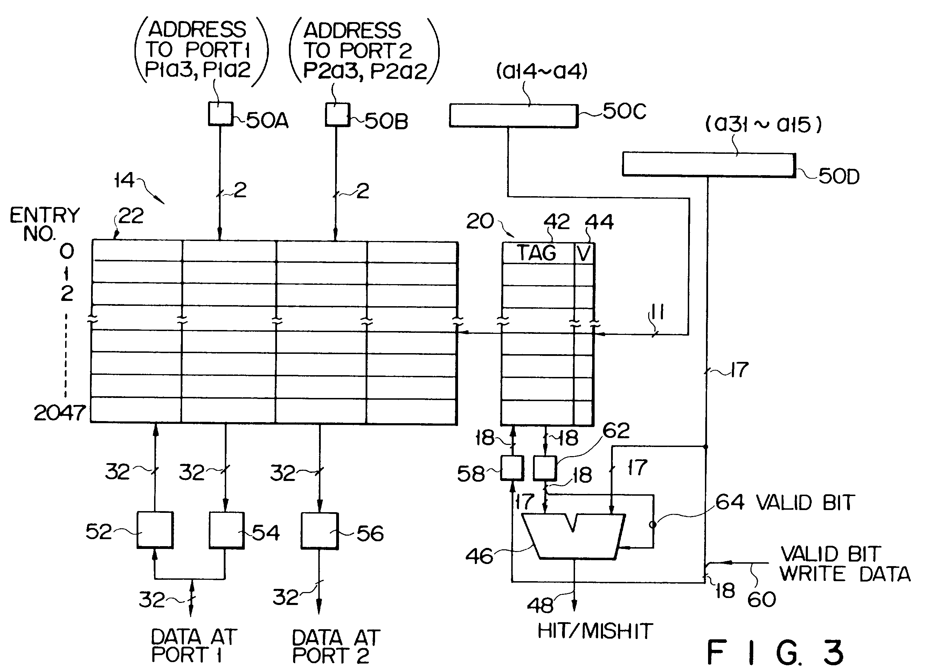

Fig. 3 is a block diagram according to the first embodiment of the present invention, in which the cache memory of the direct mapping system driven by a 32-bit microprocessor is used. In particular, in this embodiment, a dual port memory is used as the cache memory 14. The microprocessor 12 includes address registers 50A, 50B, 50C, and 50D which store request addresses to be supplied to the cache memory 14. Assume that addresses a31 to a0 stored in these address registers 50A, 50B, 50C, and 50D are byte addresses. In this case, since one word consists of 32 bits, the upper 30 bits a31 to a2 of the address are used to access the word, and the lower two bits a1 and a0 designate one of four byte data which constitute one word. In particular, the addresses a3 and a2 of the upper 30 bits a31 to a2 are defined as P1a3 and P1a2, and P2a3 and P2a2, respectively. These addresses are supplied to both ports of the dual port data memory section, respectively. In the arrangement shown in Fig. 3, therefore, two words in one data block can be simultaneously accessed. Note that one data block in the data memory section 22 consists of four words (16 bytes), and one data block in the directory section 20 consists of 18 bits (17 bits for tag information, and 1 bit for a valid bit). In other words, the data block size corresponds to four words (four subblocks). The entry number of the blocks is 2¹¹= 2,048.

The addresses P1a3 and P1a2 to a port 1 in the data memory section 22 are set in the address register 50A as a word address. The addresses P2a3 and P2a2 to a port 2 in the data memory section 22 are set in the address register 50B as a word address. The addresses a14 to a4 which designate an entry number of a block to be supplied to the directory section 20 are set in the address register 50C as a tag address included in the data block address. The addresses a31 to a15 to be supplied to the comparator 46 are set in the address register 50D as address data included in the data block address.

Data is written in the port 1 of the data memory section 22 through a write buffer 52, and data at the port 1 of the data memory section 22 is read out through a read buffer 54. In addition, data at the port 2 in the data memory section 22 is read out through a read buffer 56.

On the other hand, valid bit write data 60 is written in the directory section 20 through a write buffer 58. At this time, the valid bit write data 60 is also supplied to the tag information portion 42 in the directory section 20 through the write buffer 58 together with the data corresponding to the addresses a31 to a15 set in the address register 50D as a total of 18-bit data. Data in the directory section 20 is read out through a read buffer 62.

Of the data read out from the directory section 20, the data from the tag valid bit portion 44 is fetched as a valid bit 64, and is supplied to the comparator 46.

With the above arrangement, an operation performed when data is read out from the cache memory 14 by the microprocessor 12 will be described hereinafter.

The microprocessor 12 sets a common address corresponding to the addresses a31 to a4 in the address registers 50C and 50D as addresses to designate two words. These set addresses a31 to a4 are input to the directory section 20 in the cache memory 14 through the address bus 16. In addition, the microprocessor 12 sets the addresses P1a3 and P1a2, and P2a3 and P2a2 which designate the port of the data memory section 22 in the address registers 50A and 50B, respectively. These set addresses P1a3 and P1a2, and P2a3 and P2a2 are input to the data memory section 22 in the cache memory 14 through the address bus 16. In the data memory section 22 having a dual port arrangement, the data at the port 1 is designated by the addresses P1a3 and P1a2, and the data at the port 2 is designated by the addresses P2a3 and P2a2.

The 17-bit tag information and valid 1 bit in the block having the entry number designated by the addresses a14 to a4 are read through the buffer 62. In addition, one word of the four words included in the block having the designated entry number is designated by the addresses P1a3 and P1a2, and the 32-bit data of the designated one word is read through the buffer 54. Furthermore, another word of the four words included in the block having the designated entry number is designated by the addresses P2a3 and P2a2, and 32-bit data of the designated one word is read through the buffer 56. In other words, two words which can be simultaneously read are limited to the words in a single block.

The comparator 46 compares the addresses a31 to a15 supplied from the address register 50D with the read 17-bit tag information. If the comparison result indicates a "coincidence", and the read valid bit 64 is set at "1", i.e., valid, a "hit" is determined. The microprocessor 12 uses the read data on the basis of the hit/mishit output 48 from the comparator 46. In contrast to this, if the comparison result indicates a "noncoincidence" or the valid bit 64 is set at "0", a "mishit" is determined. For this reason, the microprocessor 12 starts the above-mentioned trapping processing on the basis of the hit/mishit output 48 from the comparator 46. After this trapping processing is completed, the required data is accessed again.

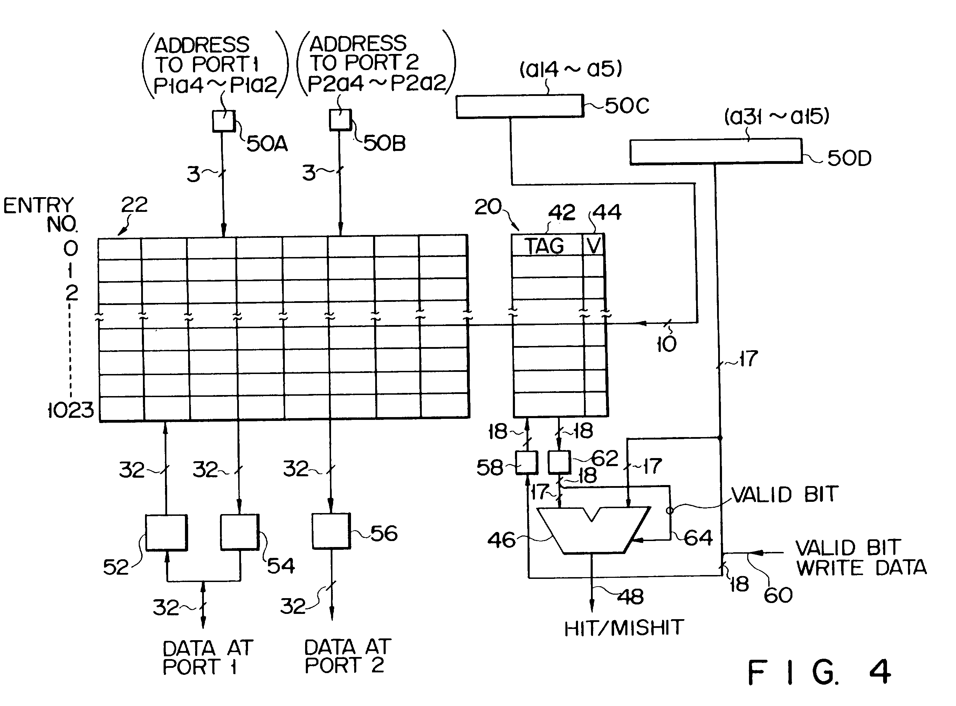

Fig. 4 is a block diagram showing an arrangement of an information processing apparatus according to the second embodiment of the present invention. In the data memory section 22 in the first embodiment, 2,048 entries are grouped such that one block consists of four words. However, in a data memory section 22 in the second embodiment, 1,024 entries are grouped such that one block consists of eight words. An address register 50A supplies addresses P1a4 to P1a2 to a port 1 in the data memory section 22, and an address register 50B supplies addresses P2a4 to P2a2 to a port 2 in the data memory section 22. An address register 50C supplies addresses a14 to a5 which designate the entry numbers of the blocks to a directory section 20.

In the above first embodiment, the number of words which can be simultaneously read is two of four words. However, according to the arrangement of the second embodiment, two words of eight words can be simultaneously read. This allows an increase in the degree of freedom of the program.

Thus, in the first and second embodiments, the data memory section 22 has two read ports and one write port. Although read and write operations cannot be simultaneously performed, arbitrary two data in a single block can be simultaneously read. Therefore, high-speed processing of the information processing apparatus can be realized.

A cache memory 14 may have three or more output ports. In this case, words corresponding in number to the ports can be read out.

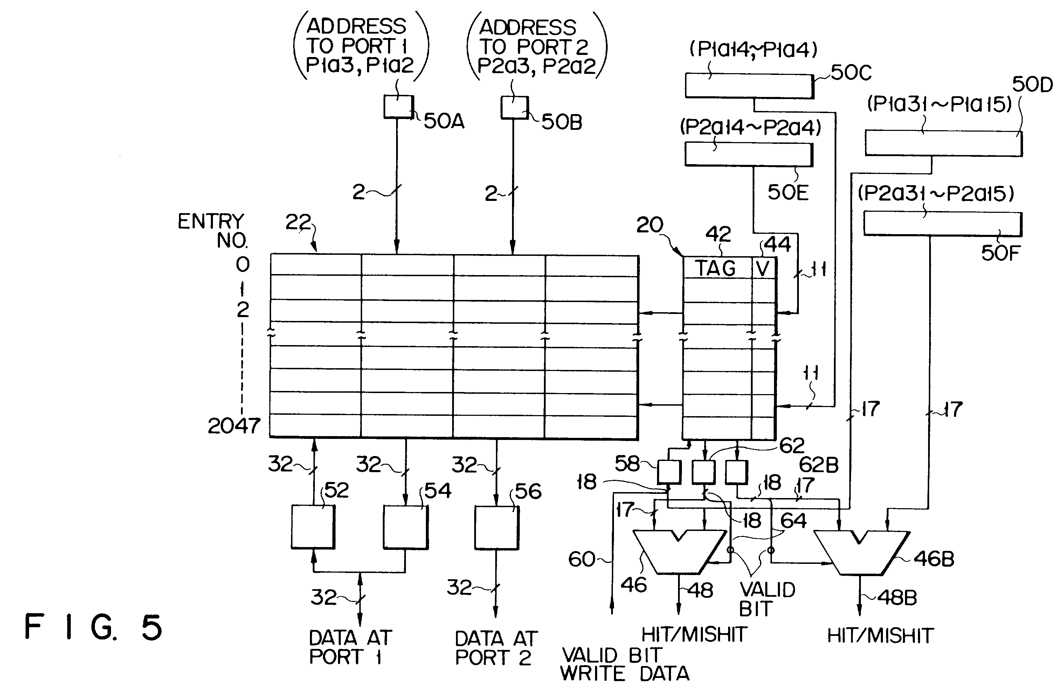

Fig. 5 is a block diagram showing an arrangement of an information processing apparatus according to the third embodiment of the present invention. The data memory section 22 in the first and second embodiments includes two read ports. However, in the third embodiment, not only a data memory section 22, but also a directory section 20 includes two read ports. An address register 50C supplies addresses P1a14 to P1a4 to a port 1 in the directory section 20, and an address register 50E supplies addresses P2a14 to P2a4 to a port 2 in the directory section 20. An address register 50D supplies addresses P1a31 to P1a15 to the port 1 to a comparator 46, and an address register 50F supplies addresses P2a31 to P2a15 to the port 2 to a comparator 46B. The comparator 46B receives the data from the port 2 in the directory section 20 through a read buffer 62B to output a hit/mishit output 48B.

With the above arrangement, in the information processing apparatus in the third embodiment, words which can be simultaneously read are not limited to those in a single block, and words in arbitrary blocks can be selected and read. In this case, two comparators 68 and 68B are operated to detect a cache error. This is because a microprocessor 12 determines a "hit" only when both the data which are simultaneously read are present in a cache memory 14, and both the hit/mishit outputs 48 and 48B are "1". When at least one of the hit/mishit outputs 48 and 48B is "0", the microprocessor 12 performs trapping processing such as replacement.

Also in the third embodiment, when the cache memory 14 having three or more output ports is used, words corresponding in number to the ports can be read out.

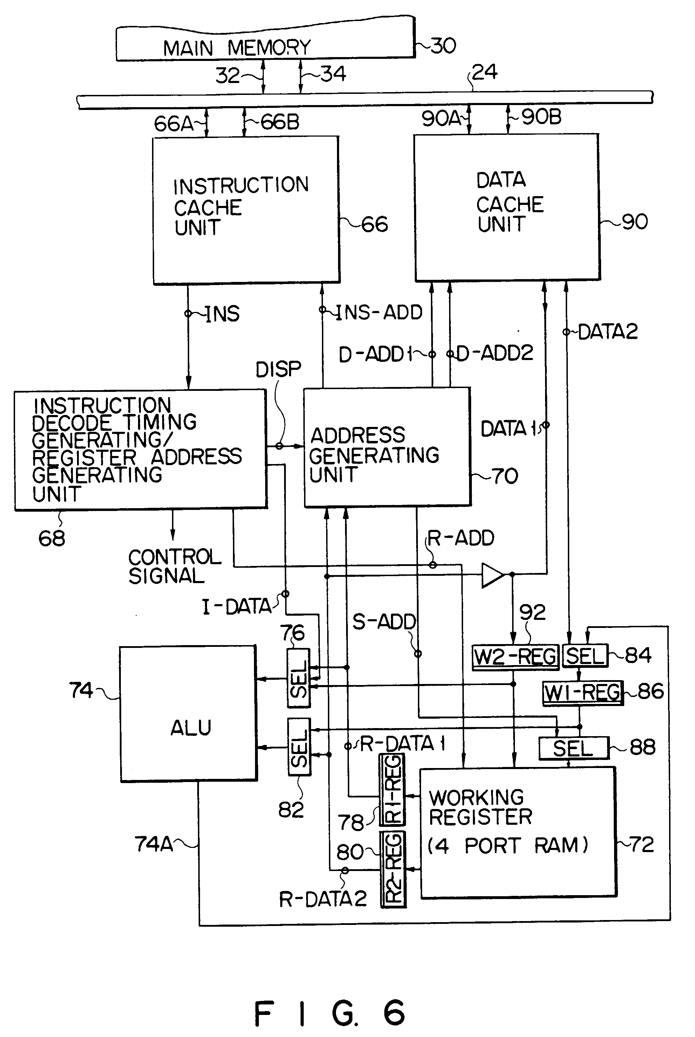

Fig. 6 is a block diagram for explaining processing of the 32-bit microprocessor applied to the embodiments of the present invention shown in Figs. 3 to 5. In Fig. 6, the cache memory 14 is divided into data and instruction cache units, and only the data cache unit has the arrangement shown in Figs. 3 to 5. Note that the instruction cache unit can have the same arrangement as that of the data cache unit, as a matter of course.

An instruction cache unit 66 is connected to the system bus 24 through data and address buses 66A and 66B, and supplies an instruction (INS) to an instruction decode timing generating/register address generating unit 68. The instruction decode timing generating/register address generating unit 68 generates a control signal, and supplies a displacement (DISP) for relative jump of a program counter to an address generating unit 70. The instruction decode timing generating/register address generating unit 68 also supplies a register address (R-ADD) to a working register 72, and supplies immediate data (I-DATA) to an arithmetic and logic unit (ALU) 74 through a selector (SEL) 76.

The working register 72 supplies first and second register data (R-DATA1 and R-DATA2) to the address generating unit 70 through read registers (R1-REG) 78 and (R2-REG) 80, respectively. These first and second register data are also supplied to the arithmetic and logic unit 74 through selectors 76 and 82, respectively. An arithmetic bus 74A from the arithmetic and logic unit 74 is connected to the working register 72 through a selector 84, a write register (W1-REG) 86 and a selector 88. An output from the write register 86 is supplied to the arithmetic and logic unit 74 through the selector 82.

The second register data from the working register 72 is supplied to a data cache unit 90 as first data (DATA1) through a write register (W2-REG) 92. The output terminal of the write register 92 is also connected to the arithmetic and logic unit 74 through the selector 76.

An instruction address (INS-ADD) from the address generating unit 70 is supplied to the instruction cache unit 66, and the first and second data addresses (D-ADD1 and D-ADD2) are supplied to the data cache unit 90. A save address (S-ADD) is supplied from the address generating unit 70 to the working register 72 through the selector 88.

The data cache unit 90 is connected to the system bus 24 through data and address buses 90A and 90B. The data cache unit 90 supplies second data (DATA2) to the write register 86 through the selector 84.

With the above arrangement, if two words can be simultaneously written in the working register 72, two data in the data cache unit 90 can be read by one access, and the read data can be supplied to the arithmetic and logic unit 74 as source data to perform an arithmetic operation, or to be written in the working register 72.

One of the cache memories in the above first to third embodiments can be formed on a single semiconductor chip together with the microprocessor.

As described above, according to the present invention, only one access is required to read two words although two accesses are required to read two words in the conventional apparatus. Therefore, a processing speed can be greatly increased. More specifically, when the dual port memory is used as a cache memory, two words can be simultaneously accessed, thus greatly increasing a processing speed. When the memory which has the ports corresponding in number to the words is used as the cache memory, three or more words can be read by one access.

Reference signs in the claims are intended for better understanding and shall not limit the scope.

## Claims

1. An information processing apparatus, having:
a first memory (30) for storing a large amount of data in units of data blocks each having a predetermined size, said first memory (30) storing a plurality of data blocks, each of said data blocks including a plurality of subblocks, and each of said subblocks including a plurality of byte data;
a second memory (22), connected to said first memory (30) so as to transfer data to/from said memory (30) in units of data blocks, for storing a predetermined number of data blocks to perform high-speed processing;
address generating means (12; 70) for generating a desired data block address (a31-a4) and a desired data subblocks address (a3, a2) to access a desired data subblock in a desired data block in said second memory (22);
determining means (20, 46) for receiving said data block address generated by said address generating means (12; 70) and for determining (48) whether the desired data block is present in said second memory (22); and
reading means (12, 54, 56), connected to said second memory (22) and said determining means (20, 46), for reading said desired data subblock corresponding to the data subblock address of said desired data subblock included in the desired data block from said second memory (22) when said determining means determines that said desired data block is present in said second memory (22),
characterized in that
said address generating means (12; 70) is operable to generate simultaneously said data block address (a31-a4) corresponding to the desired data block and a plurality of data subblock addresses (P1a3, P1a2, P2a3, P2a2) corresponding to a plurality of desired data subblocks to be accessed from said second memory (22), said data block address being common to each of said plurality of data subblock addresses; and
said reading means (12, 54,56) is operable to read simultaneously said plurality of desired data subblocks corresponding to the data subblock addresses of said desired data subblocks included in the desired data block from said second memory (22) when said determining means determines that said desired data block is present in said second memory (22),
the apparatus further comprising:
transferring means (12, 28, 24, 34) for, when said determining means determines that the desired data block is not present in said second memory (22), transferring the desired data block from said first memory (30) to said second memory (22); and
said reading means (12, 54, 56) for simultaneously reading said plurality of desired data subblocks corresponding to the data subblock addresses of said desired data subblocks included in said desired data block after the transfer of the desired data block by said transferring means (12), and wherein
said second memory (22) includes a plurality of address input ports (50A, 50B) and a plurality of data output ports (54, 56), the number of said address input ports corresponding to the number of said desired data subblocks and the number of said data output ports corresponding to the number of said desired data subblocks.

2. The information processing apparatus according to claim 1, characterized in that
said address generating means (12, 70) includes:
a first register (50C, 50D) for storing said generated data block address (a31-a4); and
a plurality of second registers (50A, 50B) for respectively storing a plurality of data subblock addresses,
the data block address stored in said first register is supplied to said determining means (20, 46), and
the plurality of data subblock addresses stored in said plurality of second registers (50A, 50B) are supplied to respective address input ports in said second memory (22).

3. The information processing apparatus according to claim 2, characterized in that
said determining means (20, 46) includes tag information storing means (42) for storing tag information representing correspondence between each data block stored in said second memory (22) and the corresponding data block stored in said first memory (30),
the data block address (a31-a4) stored in said first register (50C, 50D) includes a tag address (a14-a4) representing an address of said tag information storing means (42), said data block address being supplied to said tag information storing means (42) for reading of tag information (62), and address data (a31-a15) are compared with said corresponding tag information (62) to be read from said tag information storing means (42) in accordance with said tag address, and
said first register includes a first subregister (50C) for storing the tag address (a14-a4), and a second subregister (50D) for storing the address data (a31-a15).

4. The information processing apparatus according to claim 3, characterized in that
said determining means further includes comparing means (46) for comparing the tag information (62) read from said tag information storing means (42) in accordance with the tag address (a14-a4) stored in said first subregister (50C) with the address data (a31-a15) stored in said second subregister (50D).

5. The information processing apparatus according to claim 4, characterized in that
said first reading means (12, 54, 56) includes means for reading a plurality of data subblocks corresponding to the plurality of data subblock addresses (P1a3, P1a2, P2a3, P2a2) stored in said plurality of second registers (50A, 50B) in the data block in said second memory (22) corresponding to the tag address stored in said first subregister (50C) from said second memory (22).

6. The information processing apparatus according to claim 1, characterized in that
said address generating means (12; 70) simultaneously generates a plurality of data block addresses (P1a31-P1a4, P2a31-P2a4) according to a plurality of desired data blocks, and a plurality of data subblock addresses (P1a3, P1a2, P2a3, P2a2) corresponding to a plurality of desired data subblocks, each of said data block addresses being common to two or more of said data subblock addresses, said address generating means (12; 70) simultaneously generating said data block and subblock addresses in order to access said plurality of desired data subblocks included in said plurality of desired data blocks from said second memory (22);
said determining means (20, 46, 46B) receives said data block addresses generated by said address generating means (12; 70) and determines whether all desired data blocks are present in said second memory (22);
said first reading means (12, 54, 56) simultaneously reads said plurality of desired data subblocks from said second memory (22) when said determining means determines that all of said desired data blocks are present in said second memory (22);
said transferring means (12, 28, 34, 24), when said determining means determines that one of said desired data blocks is not present in said second memory (22), transfers said one of said desired data blocks from said first memory (30) to said second memory (22); and
said second reading means (12, 54, 56) simultaneously reads said plurality of desired data subblocks corresponding to the data subblock addresses after the transfer of the desired data block determined to be not present in said second memory (22).

7. The information processing apparatus according to claim 6, characterized in that
said address generating means (12, 70) includes:
a plurality of first registers (50C, 50F) for respectively storing said generated data block addresses (P1a31-P1a4, P2a31-P2a4);
a plurality of second resisters (50A, 50B) for respectively storing a plurality of data subblock addresses,
the plurality of data block addresses stored in said plurality of first registers is supplied to said determining means (20, 46, 46B), and
the plurality of data subblock addresses stored in said plurality of second registers (50A, 50B) are supplied to the respective address input ports in said second memory (22).

8. The information processing apparatus according to claim 7, characterized in that
said determining means (20, 46, 46B) includes tag information storing means (42) for storing tag information representing correspondence between each data block stored in said second memory (22) and the corresponding data block stored in said first memory (30),
the data block addresses stored in said plurality of first registers include tag addresses (P1a14-P1a4, P2a14-P2a4), each representing an address of said tag information storing means (42), said data block addresses being supplied to said tag information storing means (42) for reading of the tag information, and address data (P1a31-P1a15, P2a31-P2a15) are compared with the corresponding tag information to be read from said tag information storing means (42) in accordance with said tag addresses, and
said plurality of first registers respectively include a plurality of first subregisters (50C, 50E) for storing the tag addresses, and a plurality of second subregisters (50D, 50F) for storing the address data.

9. The information processing apparatus according to claim 8, characterized in that
said determining means (20, 46, 46B) further includes a plurality of comparing means (46, 46B) for respectively comparing the tag information read from said tag information storing means (42) in accordance with the tag addresses stored in said first plurality of first subregisters (50C, 50E) with the address data stored in said plurality of second subregisters (50D, 50F).

10. The information processing apparatus according to claim 9, characterized in that
said first reading means (12, 54, 56) includes means for reading a plurality of data subblocks corresponding to the plurality of data subblock addresses (P1a3, P1a2, P2a3, P2a2) stored in said plurality of second registers (50A, 50B) in the data blocks in said second memory (22) corresponding to the tag addresses stored in said plurality of first subregisters (50C, 50E) from said second memory (22).

## Patentansprüche

1. Informationsverarbeitungsgerät, enthaltend:
einen ersten Speicher (30) zum Speichern einer großen Menge von Daten in Einheiten von Datenblöcken jeweils mit einer festgelegten Größe, wobei der erste Speicher (30) mehrere Datenblöcke speichert und jeder der Datenblöcke mehrere Unterblöcke enthält und jeder der Unterblöcke mehrerer Datenbytes umfaßt;
einen zweiten Speicher (22), der mit dem ersten Speicher (30) so verbunden ist, daß Daten zu/von dem Speicher (30) in Einheiten von Datenblöcken übertragen werden, und zwar zum Speichern einer festgelegten Zahl von Datenblöcken zum Durchführen einer Bearbeitung mit hoher Geschwindigkeit;
eine Adressenerzeugungsvorrichtung (12; 70) zum Erzeugen einer gewünschten Datenblockadresse (a31-a4) und einer gewünschten Datenunterblockadresse (a3-a2) für den Zugriff auf einen gewünschten Datenunterblock in einem gewünschten Datenblock bei dem zweiten Speicher (22);
eine Bestimmungsvorrichtung (20, 46) zum Empfangen der Datenblockadresse, die von der Adressenerzeugungsvorrichtung (12; 70) erzeugt ist, und zum Bestimmen (48), ob der gewünschte Datenblock in dem zweiten Speicher (22) vorliegt; und
eine Lesevorrichtung (12, 54, 56), die mit dem zweiten Speicher (22) und der Bestimmungsvorrichtung (20, 46) verbunden ist und zum Lesen des gewünschten Datenunterblocks gemäß der Datenunterblockadresse des gewünschten Datenunterblocks in dem gewünschten Datenblock bei dem zweiten Speicher (22) vorgesehen ist, wenn die Bestimmungsvorrichtung bestimmt, daß der gewünschte Datenblock in dem zweiten Speicher (22) vorliegt,
dadurch **gekennzeichnet**, daß
die Adressenerzeugungsvorrichtung (12; 70) betriebsgemäß gleichzeitig die Datenblockadresse (a31-a4) gemäß dem gewünschten Datenblock und mehrere Datenunterblockadressen (P1a3, P1a2, P2a3, P2a2) gemäß der mehreren gewünschten Datenunterblöcke, auf die über den zweiten Speicher (22) zuzugreifen ist, erzeugt, wobei die Datenblockadresse für jede der mehreren Datenunterblockadressen gleich ist; und
die Lesevorrichtung (12, 54, 56) betriebsgemäß gleichzeitig mehrere der gewünschten Datenunterblöcke liest, gemäß der Datenunterblockadressen der gewünschten Datenunterblöcke in dem gewünschten Datenblock, und zwar aus dem zweiten Speicher (22) dann, wenn die Bestimmungsvorrichtung bestimmt, daß der gewünschte Datenblock in dem zweiten Speicher (22) vorliegt; wobei
das Gerät ferner enthält:
eine Übertragungsvorrichtung (12, 28, 24, 36) zum Übertragen der gewünschten Datenblöcke aus dem ersten Speicher (30) zu dem zweiten Speicher (22) dann, wenn die Bestimmungsvorrichtung bestimmt, daß der gewünschte Datenblock nicht in dem zweiten Speicher (22) vorliegt; und wobei
die Lesevorrichtung (12, 54, 56) zum gleichzeitigen Lesen mehrerer der gewünschten Datenblöcke vorgesehen ist, gemäß den Datenunterblockadressen der gewünschten Datenunterblöcke in dem gewünschten Datenblock nach dem Transfer der gewünschten Datenblöcke durch die Übertragungsvorrichtung (12); und
der zweite Speicher (22) mehrere Adresseneingangsports (50A, 50B) aufweist, sowie mehrere Datenausgangsports (54, 56) und die Zahl der Adresseneingangsports der Zahl der gewünschten Datenunterblöcke entspricht und die Zahl der Datenausgangsports der Zahl der gewünschten Datenunterblöcke entspricht.

2. Informationsverarbeitungsgerät nach Anspruch 1, dadurch gekennzeichnet, daß
die Adressenerzeugungsvorrichtung (12, 70) enthält:
ein erstes Register (50C, 50D) zum Speichern der erzeugten Datenblockadresse (a31-a4); und
mehrere zweite Register (50A, 50B) zum jeweiligen Speichern von Datenunterblockadressen; wobei
die in dem ersten Register gespeicherte Datenblockadresse der Bestimmungsvorrichtung (20, 46) zugeführt wird; und
die in den mehreren zweiten Registern (50A, 50B) gespeicherten mehreren Datenunterblockadressen den zugeordneten Adresseneingangsports bei dem zweiten Speicher (22) zugeführt werden.

3. Informationsverarbeitungsgerät nach Anspruch 2, dadurch gekennzeichnet, daß
die Bestimmungsvorrichtung (20, 46) eine Hinweisinformations-Speichervorrichtung (42) enthält, zum Speichern von Hinweisinformation zum Darstellen der Zuordnung zwischen jedem Datenblock, der in dem zweiten Speicher (22) gespeichert ist, und dem zugeordneten Datenblock, der in dem ersten Speicher (30) gespeichert ist; wobei
die in dem ersten Register (50C, 50E) gespeicherte Datenblockadresse (a31-a4) eine Hinweisadresse (a14-a4) zum Darstellen einer Adresse für die Hinweisinformations-Speichervorrichtung (42) enthält, die Datenblockadresse der Hinweisinformations-Speichervorrichtung (42) zugeführt wird, damit eine Hinweisinformation (63) ausgelesen wird, und ferner Adressendaten (a31-a15) mit der zugeordneten Hinweisinformation (62) verglichen werden, die aus der Hinweisinformations-Speichervorrichtung (42) in Übereinstimmung mit der Hinweisadresse auszulesen ist; und
das erste Register ein erstes Unterregister (50C) zum Speichern der Hinweisadresse (a14-a1) und ein zweites Unterregister (50D) zum Speichern der Adressendaten (a31-a15) enthält.

4. Informationsverarbeitungsgerät nach Anspruch 3, dadurch gekennzeichnet, daß
die Bestimmungsvorrichtung ferner eine Vergleichsvorrichtung (46) enthält, und zwar zum Vergleichen der aus der Hinweisinformations-Speichervorrichtung (42) in Übereinstimmung mit der Hinweisadresse (a14-a4), die in dem ersten Unterregister (50C) gespeichert ist), ausgelesenen Hinweisinformation (62) mit dem in dem zweiten Unterregister (50D) gespeicherten Adressendaten (a31-a15).

5. Informationsverarbeitungsgerät nach Anspruch 4, dadurch gekennzeichnet, daß
die erste Lesevorrichtung (12, 54, 56) eine Vorrichtung zum Lesen mehrerer Datenunterblöcke enthält, und zwar gemäß den mehreren Datenunterblockadressen (P1a3, P1a2, P2a3, P2a2), die in den mehreren zweiten Registern (50A, 50B) bei dem Datenblock in dem zweiten Speicher (22) gespeichert sind, in Übereinstimmung mit der Hinweisadresse, die in dem ersten Unterregister (50C) in dem zweiten Speicher (22) gespeichert ist.

6. Informationsverarbeitungsgerät nach Anspruch 1, dadurch gekennzeichnet, daß
die Adressenerzeugungsvorrichtung (12; 70) gleichzeitig mehrere Datenblockadressen (P1a31-P1a4, P2a31-P2a4) erzeugt und zwar gemäß den mehreren gewünschten Datenblöcken, sowie mehrere Datenunterblockadressen (P1a3, P1a2, P2a3, P2a2) gemäß den mehreren gewünschten Datenunterblöcken, und daß jede der Datenblockadressen für zwei oder mehr der Datenunterblockadressen gleich ist, daß die Adressenerzeugungsvorrichtung (12; 70) gleichzeitig die Datenblock- und -Unterblockadressen erzeugt, damit auf die mehreren gewünschten Datenunterblöcke in den mehreren gewünschten Datenblöcken des zweiten Speichers (22) zugegriffen wird;
die Bestimmungsvorrichtung (20, 46, 46B) die von der Adressenerzeugungsvorrichtung (12; 70) erzeugten Datenblockadressen empfängt und bestimmt, ob alle gewünschten Datenblöcke in dem zweiten Speicher (22) vorliegen;
die erste Lesevorrichtung (12, 54, 56) gleichzeitig die mehreren gewünschten Datenunterblöcke aus dem zweiten Speicher (22) dann liest, wenn die Bestimmungsvorrichtung bestimmt, daß sämtliche gewünschte Datenblöcke in dem zweiten Speicher (22) vorliegen;
die Übertragungsvorrichtung (12, 28, 34, 26) dann, wenn die Bestimmungsvorrichtung bestimmt, daß einer der gewünschten Datenblöcke in dem zweiten Speicher (22) nicht vorliegt, einen der gewünschten Datenblöcke aus dem ersten Speicher (30) zu dem zweiten Speicher (22) überträgt; und
die zweite Lesevorrichtung (12, 54, 56) gleichzeitig die mehreren gewünschten Datenunterblöcke gemäß den Datenunterblockadressen nach der Übertragung des gewünschten Datenblocks, der als nicht vorliegend in dem zweiten Speicher (22) klassifiziet wurde, liest.

7. Informationsverarbeitungsgerät nach Anspruch 6, dadurch gekennzeichnet, daß
die Adressenerzeugungsvorrichtung (12, 70) enthält:
mehrere erste Register (50C-50F) zum jeweiligen Speichern der erzeugten Datenblockadressen (P1a31-P1a4, P2a31-P2a4); und
mehrere zweite Register (50A, 50B) zum jeweiligen Speichern der mehreren Datenunterblockadressen; wobei
die mehreren Datenblockadressen, die in den mehreren ersten Registern gespeichert sind, der Bestimmungsvorrichtung (20, 46, 46B) zugeführt werden; und
die mehreren Datenunterblockadressen, die in den mehreren zweiten Registern (50A, 50B) gespeichert sind, den zugeordneten Adresseneingangsports bei dem zweiten Speicher (22) zugeführt werden.

8. Informationsverarbeitungsgerät nach Anspruch 7, dadurch gekennzeichnet, daß
die Bestimmungsvorrichtung (20, 46, 46B) eine Hinweisinformations-Speichervorrichtung (42) enthält zum Speichern von Hinweisinformation zum Darstellen der Zuordnung zwischen jedem Datenblock, der in dem zweiten Speicher (22) gespeichert ist, und dem zugeordneten Datenblock, der in dem ersten Speicher (30) gespeichert ist; wobei
die in den mehreren ersten Registern gespeicherten Datenblockadressen Hinweisadressen (P1a14-P1a4, P2a14-P2a4) enthalten, die jeweils eine Adresse der Hinweisinformations-Speichervorrichtung (42) darstellen, und die Datenblockadressen der Hinweisinformations-Speichervorrichtung (42) zum Speichern der Hinweisinformation zugeführt werden und Adressendaten (P1a31-P1a15, P2a31-P2a15) mit der aus der Hinweisinformations-Speichervorrichtung (42) in Übereinstimmung mit den Hinweisadressen auszulesenden Hinweisinformation verglichen werden, und
die mehreren ersten Register jeweils mehrere erste Unterregister (50C, 50E) enthalten, und zwar zum Speichern der Hinweisadressen, sowie mehrere zweite Unterregister (50D, 50F) zum Speichern der Adressendaten.

9. Hinweisinformationsverarbeitungsgerät nach Anspruch 8, dadurch gekennzeichnet, daß
die Bestimmungsvorrichtung (20, 46, 46B) ferner mehrere Vergleichsvorrichtungen (46, 46B) enthält, jeweils zum Vergleichen der aus der Hinweisinformations-Speichervorrichtung (42) in Übereinstimmung mit den in den mehreren ersten Unterregistern (50C, 50E) gespeicherten Hinweisadressen ausgelesenen Hinweisinformation mit den in den mehreren zweiten Unterregistern (50D, 50F) gespeicherten Adreßdaten.

10. Informationsverarbeitungsgerät nach Anspruch 9, dadurch gekennzeichnet, daß
die erste Lesevorrichtung (12, 54, 56) eine Vorrichtung zum Lesen mehrerer Datenunterblöcke enthält, gemäß der mehreren Datenunterblockadressen (P1a3, P1a2, P2a3, P2a2), die in den mehreren zweiten Registern (50A, 50B) in den Datenblöcken des zweiten Speichers (22) gespeichert sind, und zwar gemäß den Hinweisadressen, die in den mehreren ersten Unterregistern (50C, 50E) des zweiten Speichers (22) gespeichert sind.

## Revendications

1. Un appareil de traitement d'information, comportant :
une première mémoire (30) pour enregistrer une grande quantité de données par unités de blocs de données ayant chacun une taille prédéterminée, cette première mémoire (30) enregistrant un ensemble de blocs de données, chacun de ces blocs de données contenant un ensemble de sous-blocs, et chacun des sous-blocs comprenant un ensemble de données d'octets;
une seconde mémoire (22), connectée à la première mémoire (30) de façon à transférer des données vers cette mémoire (30), et à partir de celle-ci, en unités de blocs de données, pour enregistrer un nombre prédéterminé de blocs de données, de façon à effectuer un traitement rapide;
des moyens de génération d'adresse (12; 70) pour générer une adresse de bloc de données désiré (a31-a4) et une adresse de sous-bloc de données désiré (a3, a2), pour accéder à un sous-bloc de données désiré dans un bloc de données désiré dans la seconde mémoire (22);
des moyens de détermination (20, 46) pour recevoir l'adresse de bloc de données qui est générée par les moyens de génération d'adresse (12; 70), et pour déterminer (48) si le bloc de données désiré est présent dans la seconde mémoire (22); et
des moyens de lecture (12, 54_{,} 56), connectés à la seconde mémoire (22) et aux moyens de détermination (20, 46), pour lire dans la seconde mémoire (22) le sous-bloc de données désiré correspondant à l'adresse de sous-bloc de données du sous-bloc de données désiré qui se trouve dans le bloc de données désiré, lorsque les moyens de détermination déterminent que le bloc de données désiré est présent dans la seconde mémoire (22),
caractérisé en ce que
les moyens de génération d'adresse (12; 70) sont capables de générer simultanément l'adresse de bloc (a31-a4) correspondant au bloc de données désiré, et un ensemble de sous-blocs de données (P1a3, P1a2, P2a3, P2a2) correspondant à un ensemble de sous-blocs de données désirés auxquels on doit accéder dans la seconde mémoire (22), l'adresse de bloc de données étant commune à chacune des adresses de l'ensemble d'adresses de sous-bloc de données; et
les moyens de lecture (12, 54, 56) sont capables de lire simultanément dans la seconde mémoire (22) l'ensemble de sous-blocs de données désirés correspondant aux adresses de sous-blocs de données des sous-blocs de données désirés se trouvant dans le bloc de données désiré, lorsque les moyens de détermination déterminent que le bloc de données désiré est présent dans la seconde mémoire (22),
l'appareil comprenant en outre :
des moyens de transfert (12, 28, 24, 34) pour transférer le bloc de données désiré de la première mémoire (30) vers la seconde mémoire (22), lorsque les moyens de détermination déterminent que le bloc de données désiré n'est pas présent dans la seconde mémoire (22); et
les moyens de lecture (12, 54, 56) lisant simultanément l'ensemble de sous-blocs de données désirés, correspondant aux adresses de sous-bloc de données des sous-blocs de données désirés qui se trouvent dans le bloc de données désiré, après le transfert du bloc de données désiré par les moyens de transfert (12), et
la seconde mémoire (22) comprenant un ensemble de ports d'entrée d'adresse (50A, 50B) et un ensemble de ports de sortie de données (54, 56), le nombre des ports d'entrée d'adresse correspondant au nombre des sous-blocs de données désirés et le nombre des ports de sortie de données correspondant au nombre des sous-blocs de données désirés.

2. L'appareil de traitement d'information selon la revendication 1, caractérisé en ce que
les moyens de génération d'adresse (12, 70) comprennent :
un premier registre (50C, 50D) pour enregistrer l'adresse de bloc de données qui est générée (a31-a4); et
un ensemble de seconds registres (50A, 50B) pour enregistrer respectivement un ensemble d'adresses de sous-bloc de données,
l'adresse de bloc de données qui est enregistrée dans le premier registre est appliquée aux moyens de détermination (20, 46), et
l'ensemble d'adresses de sous-bloc de données qui sont enregistrées dans l'ensemble de seconds registres (50A, 50B) sont appliquées à des ports d'entrée d'adresse respectifs dans la seconde mémoire (22).

3. L'appareil de traitement d'information selon la revendication 2, caractérisé en ce que
les moyens de détermination (20, 46) comprennent des moyens d'enregistrement d'information d'étiquette (42) pour enregistrer une information d'étiquette représentant la correspondance entre chaque bloc de données enregistré dans la seconde mémoire (22) et le bloc de données correspondant enregistré dans la première mémoire (30),
l'adresse de bloc de données (a31-a4) qui est enregistrée dans le premier registre (50C, 50D) comprend une adresse d'étiquette (a14-a4) représentant une adresse des moyens d'enregistrement d'information d'étiquette (42), l'adresse de bloc de données étant fournie aux moyens d'enregistrement d'information d'étiquette (42), pour lire l'information d'étiquette (62), et les données d'adresse (a31-a15) sont comparées avec l'information d'étiquette (62) correspondante qui doit être lue dans les moyens d'enregistrement d'information d'étiquette (42) conformément à l'adresse d'étiquette, et
le premier registre comprend un premier sous-registre (50C) pour enregistrer l'adresse d'étiquette (a14-a4) et un second sous-registre (50D) pour enregistrer les données d'adresse (a31-a15).

4. L'appareil de traitement d'information selon la revendication 3, caractérisé en ce que
les moyens de détermination comprennent en outre des moyens de comparaison (46) pour comparer l'information d'étiquette (62) qui est lue dans les moyens d'enregistrement d'information d'étiquette (42), conformément à l'adresse d'étiquette (a14-a4) qui est enregistrée dans le premier sous-registre (50C), avec les données d'adresse (a31-a15) qui sont enregistrées dans le second sous-registre (50D).

5. L'appareil de traitement d'information selon la revendication 4, caractérisé en ce que
les premiers moyens de lecture (12, 54, 56) comprennent des moyens pour lire dans la seconde mémoire (22) un ensemble de sous-blocs de données correspondant à l'ensemble d'adresses de sous-bloc de données (P1a3, P1a2, P2a3, P2a2) enregistrées dans l'ensemble de seconds registres (50A, 50B), dans le bloc de données dans la seconde mémoire (22) qui correspond à l'adresse d'étiquette qui est enregistrée dans le premier sous-registre (50C).

6. L'appareil de traitement d'information selon la revendication 1, caractérisé en ce que
les moyens de génération d'adresse (12; 70) génèrent simultanément un ensemble d'adresses de bloc de données (P1a31-P1a4, P2a31-P2a4) conformément à un ensemble de blocs de données désirés, et un ensemble d'adresses de sous-bloc de données (P1a3, P1a2, P2a3, P2a2) correspondant à un ensemble de sous-blocs de données désirés, chacune de ces adresses de bloc de données étant commune à deux ou plus des adresses de sous-bloc de données, les moyens de génération d'adresse (12; 70) générant simultanément les adresses de bloc et de sous-bloc de données de façon à accéder à l'ensemble de sous-blocs de données désirés qui sont inclus dans l'ensemble de blocs de données désirés dans la seconde mémoire (22);
les moyens de détermination (20, 46, 46B) reçoivent les adresses de bloc de données qui sont générées par les moyens de génération d'adresse (12; 70) et ils déterminent si tous les blocs de données désirés sont présents dans la seconde mémoire (22);
les premiers moyens de lecture (12, 54, 56) lisent simultanément l'ensemble de sous-blocs de données désirés dans la seconde mémoire (22), lorsque les moyens de détermination déterminent que tous les blocs de données désirés sont présents dans la seconde mémoire (22);
lorsque les moyens de détermination déterminent que l'un des blocs de données désirés n'est pas présent dans la seconde mémoire (22), les moyens de transfert (12, 28, 34, 24) transfèrent ce bloc parmi les blocs de données désirés, de la première mémoire (30) vers la seconde mémoire (22); et
les seconds moyens de lecture (12, 54, 56) lisent simultanément l'ensemble de sous-blocs de données désirés correspondant aux adresses de sous-bloc de données, après le transfert du bloc de données désiré qui, d'après la détermination qui a été faite, n'était pas présent dans la seconde mémoire (22).

7. L'appareil de traitement d'information selon la revendication 6, caractérisé en ce que
les moyens de génération d'adresse (12, 70) comprennent :
un ensemble de premiers registres (50C-50F) pour enregistrer respectivement les adresses de bloc de données qui sont générées (P1a31-P1a4, P2a31-P2a4); et
un ensemble de seconds registres (50A, 50B) pour enregistrer respectivement un ensemble d'adresses de sous-bloc de données,
l'ensemble d'adresses de bloc de données qui sont enregistrées dans l'ensemble de premiers registres est fourni aux moyens de détermination (20, 46, 46B), et
l'ensemble d'adresses de sous-bloc de données qui sont enregistrées dans l'ensemble de seconds registres (50A, 50B) est fourni aux ports d'entrée d'adresse respectifs dans la seconde mémoire (22).

8. L'appareil de traitement d'information selon la revendication 7, caractérisé en ce que
les moyens de détermination (20, 46, 46B) comprennent des moyens d'enregistrement d'information d'étiquette (42) pour enregistrer une information d'étiquette représentant la correspondance entre chaque bloc de données enregistré dans la seconde mémoire (22) et le bloc de données correspondant enregistré dans la première mémoire (30),
les adresses de bloc de données qui sont enregistrées dans l'ensemble de premiers registres comprennent des adresses d'étiquette (P1a14-P1a4, P2a14-P2a4), représentant chacune une adresse des moyens d'enregistrement d'information d'étiquette (42), ces adresses de bloc de données étant fournies aux moyens d'enregistrement d'information d'étiquette (42) pour lire l'information d'étiquette, et des données d'adresse (P1a31-P1a15, P2a31-P2a15) sont comparées avec l'information d'étiquette correspondante à lire dans les moyens d'enregistrement d'information d'étiquette (42) conformément aux adresses d'étiquette, et
l'ensemble de premiers registres comprend respectivement un ensemble de premiers sous-registres (50C, 50E) pour enregistrer les adresses d'étiquette, et un ensemble de seconds sous-registres (50D, 50F) pour enregistrer les données d'adresse.

9. L'appareil de traitement d'information selon la revendication 8, caractérisé en ce que
les moyens de détermination (20, 46, 46B) comprennent en outre un ensemble de moyens de comparaison (46, 46B) pour comparer respectivement l'information d'étiquette qui est lue dans les moyens d'enregistrement d'information d'étiquette (42), conformément aux adresses d'étiquette qui sont enregistrées dans le premier ensemble de premiers sous-registres (50C, 50E), avec les données d'adresse qui sont enregistrées dans l'ensemble de seconds sous-registres (50D, 50F).

10. L'appareil de traitement d'information selon la revendication 9, caractérisé en ce que
les premiers moyens de lecture (12, 54, 56) comprennent des moyens pour lire dans la seconde mémoire (22) un ensemble de sous-blocs de données correspondant à l'ensemble d'adresses de sous-bloc de données (P1a3, P1a2, P2a3, P2a2) enregistrées dans l'ensemble de seconds registres (50A, 50B) dans les blocs de données dans la seconde mémoire (22) correspondant aux adresses d'étiquette qui sont enregistrées dans l'ensemble de premiers sous-registres (50C, 50E).
